# EUROPÄISCHE PATENTANMELDUNG

(11) **EP 1 500 581 A2**
(43) Veröffentlichungstag der Anmeldung: **26.01.2005**
(21) Anmeldenummer: 04017213.2
(22) Anmeldetag: 21.07.2004
(51) Int. Cl.: B62H 5/14

(54) **Blockiervorrichtung für ein Bügelschloss für Zweiradfahrzeuge**

(30) Priorität: 22.07.2003 ES 200301765 U
(71) Anmelder: Luma Industrias, S.A., 20120 Hernani (Guipuzcoa) (ES)
(72) Erfinder: Muerza Munilla, Alfredo, 20120 Hernani (Guipuzcoa) (ES)
(74) Vertreter: Feldkamp, Rainer, Dipl.-Ing.

(57) **Zusammenfassung**

Ein Bügelschloss für Zweiradfahrzeuge weist einen starren Bügel (1), der fest oder lösbar Weise mit dem Rahmen des Fahrzeuges verbunden ist, einen Schlosskörper (2), der am Ende eines der zwei Schenkel des starren Bügels (1) befestigt ist, und einen drehbaren Verschlussmechanismus auf, der durch eine Stange (3) gebildet ist, die die offene Seite des starren Bügels (1) verschließen kann, wenn die Stange eine Schließstellung einnimmt, in der ihre Spitze in das Innere des Schlosskörpers (2) eingesetzt ist. Die Stange (3) ist drehbar an dem Ende des zweiten Schenkels des starren Bügels (1) über eine drehbare Halterung (4) befestigt, die sich zwischen der aktiven Schließstellung und einer Ausgangsstellung drehbar ist, in der sich die Stange (3) in Verlängerung des zweiten Schenkels des starren Bügels (1) befindet, wobei in dieser Position Blockiereinrichtungen vorgesehen sind, die die Stange (3) gegen unerwünschte Schwingungen in Betrieb des Fahrzeuges sichern und die eine Drehfestlegung der drehbaren Halterung (4) gegenüber einer festen Halterung (5) ergeben, die mit dem starren Bügel (1) fest verbunden ist. Die Blockiereinrichtungen sind durch eine in Längsrichtung verschiebbare Anordnung gebildet, die in der Ausgangsstellung der Stange (3) durch die Ausrichtung eines Stiftes (6), eines Gegenstiftes (7) und einer Druckfeder (8) gebildet ist, die den Gegenstift (7) vorspannt. Der Stift (6) ist stimseitig durch die drehbare Halterung (4) hindurch angeordnet, während der Gegenstift in einem Sitz (9) der festen Halterung (5) angeordnet und zwischen dem Stift (6) und der Druckfeder (8) eingefügt ist. Im zusammengedrückten Zustand der Feder fällt die Berührungsebene zwischen dem Stift (6) und dem Gegenstift (7) mit einer Querebene (10) zusammen, in der die Relativdrehung der drehbaren Halterung (4) gegenüber der festen Halterung (5) erfolgt, während in ihrem entspannten Zustand der Gegenstift (7) die Querebene (10) durchquert. Der Stift (6) weist eine derartige Länge auf, dass er an der Stirnseite der drehbaren Halterung (4) in einem Maß vorspringt, das in geeigneter Weise größer als der Gleitbetriebshub zwischen den komprimierten und entspannten Zuständen der Druckfeder (8) ist.

## Beschreibung

### Geblet der Erfindung

Die Erfindung bezieht sich auf eine Blockiervorrichtung für ein Bügelschloss der im Oberbegriff des Anspruchs 1 genannten Art.

Diese Erfindung bezieht sich insbesondere auf eine Blockiervorrichtung zur Anwendung auf ein Bügelschloss, das speziell für Fahrzeuge ausgebildet ist und auf einer allgemeinen Konstruktion beruht, die einen starren Bügel (oder das Fahrgestell des Fahrzeuges), der in fester oder lösbarer Weise mit dem Rahmen des Fahrzeuges verbunden ist, einen Schlosskörper, der am Ende eines der beiden Schenkel des starren Bügels (oder des Fahrzeugfahrgestells) befestigt ist, und einen drehbaren Verschlussmechanismus umfasst, der durch eine Stange gebildet ist, die durch eine elastische Vorspannkraft in der Lage ist, die offene Seite des starren Bügels (oder des Fahrzeugfahrgestells) zu verschließen, wobei die Stange eine Schließstellung einnimmt, in der ihre Spitze in das Innere des Schlosskörpers eingesetzt ist, wobei diese Stange drehbar an dem Ende des zweiten Schenkels des starren Bügels (oder des Fahrzeugfahrgestells) über eine drehbare Halterung eingebaut ist, die sich zwischen dieser aktiven Verriegelungsstellung und einer Ausgangsstellung dreht, in der sich die Stange in Verlängerung des zweiten Schenkels des starren Bügels befindet, wobei in dieser Position Verriegelungseinrichtungen vorgesehen sind, die die Stange gegenüber möglichen unerwünschten Schwingungen im Betrieb des Fahrzeuges festlegen und die praktisch eine Festlegung der drehbaren Halterung in Drehrichtung gegenüber einer festen Halterung ergeben, die mit dem starren Bügel verbunden ist, wobei dieser starre Bügel durch das Fahrzeug-Fahrgestell ersetzt sein kann, an dem der Schlosskörper und die feste Halterung dann angeschweißt sind.

Insbesondere bezieht sich diese Erfindung auf eine spezielle Konstruktion der Blockiereinrichtungen gegen eine Drehung für diese Art von Bügelschlössem.

### Stand der Technik

Auf diesem Gebiet ist eine Lösung für ein Bügelschloss bekannt, die Blockiereinrichtungen gegen eine Drehung in der offenen Stellung der Stange verwendet, die den starren Bügel (oder das Fahrzeugfahrgestell) verschließt, die darin bestehen, dass die Stange eine ringförmige Verdickung aufweist, die in der offenen Stellung der Stange gezwungen wird, eine Position einzuehmen, in der sie eine Ausnehmung durchläuft, die in der Bewegungsbahn ausgebildet ist, die diese Stange durchlaufen muss, um sich in die Schließstellung zu bewegen; die Antriebskraft wird durch eine Vorspannfeder erzielt, die überwunden werden muss, um die Entsperrung durch Drehen hervorzurufen, derart, dass dann die Verdickung der Stange die Ausnehmung der Bewegungsbahn verlässt und diese Stange sich in einer Position befindet, in der sie ihren Betriebshub zur Schließstellung ausführen kann.

Der Erfindung liegt die Aufgabe zugrunde, eine Blockiervorrichtung der eingangs genannten Art zu schaffen, die bei einfachem Aufbau und einfacher Handhabung eine sichere Blockierung der Stange in der Ruhe- oder Ausgangsstellung ermöglicht.

Diese Aufgabe wird durch die im Anspruch 1 angegebenen Mekmale gelöst.

Vorteilhafte Ausgestaltungen und Weiterbildungen der Erfindung ergeben sich aus den Unteransprüchen.

Bei der vorliegenden Erfindung sind die Blockiereinrichtungen gegen eine Drehung der drehbaren Halterung an der festen Halterung durch eine in Längsrichtung verschiebbare Anordnung gebildet, die in der Ausgangsstellung der Stange durch eine Ausrichtung eines Stiftes, eines Gegenstiftes und einer Druckfeder gebildet ist, die den Gegenstift vorspannt, wobei der Stift stirnseitig durch die drehbare Halterung hindurch angeordnet ist und der Gegenstift in einem Sitz der festen Halterung angeordnet und zwischen dem Stift und einer Druckfeder angeordnet ist, die jeweilige komprimierte und entspannte Zustände einnehmen kann. In dem komprimierten Zustand fällt die Berührungsebene zwischen dem Stift und dem Gegenstift mit einer Querebene zusammen, in der die Relativdrehung der drehbaren Halterung gegenüber der festen Halterung erfolgt, während in dem entspannten Zustand der Gegenstift diese Querebene durchqueren kann, wobei der Stift eine derartige Länge aufweist, dass er an der Stirnseite der drehbaren Halterung in einem Ausmaß vorspringt, das in zweckmäßiger Weise größer als sein Gleit-Betriebshub zwischen den komprimierten und entspannten Zuständen der Druckfeder ist.

Die Funktionsweise dieser vorgeschlagenen Vorrichtung besteht darin, dass wenn dass Bügelschloss geöffnet ist, wobei sich die Stange in Verlängerung des entsprechenden Schenkels des starren Bügels (oder des Fahrzeugfahrgestells) befindet, sich eine Ausrichtung zwischen dem Stift, dem Gegenstift und der Druckfeder ergibt und die Kraft dieser Druckfeder bewirkt, dass der Gegenstift die Querebene der Drehung durchquert und verhindert, dass die drehbare Halterung und damit die Stange sich gegenüber der festen Halterung drehen können, um diese Stange in die Schließstellung des starren Bügel (oder Fahrzeugfahrgestells) des Bügelschlosses zu bewegen, in der die Spitze der Stange (mittels Verschließen durch einen Schlüssel) im Inneren des Schlosskörpers festgelegt wird, der an dem Schenkel des starren Bügels (oder dem Fahrzeugfahrgestell) gegenüberliegend zu dem Schenkel eingebaut ist, an dem die Stange befestigt ist. Wenn man das Bügelschloss verschließen will, erfordert die Freigabe der Stange (aus ihrer Blockierung in der offenen oder Ausgangsstellung) lediglich ein Drücken auf das an der Stirnseite vorspringende Ende des Stiftes, damit aufgrund der Zusammendrückung der Druckfeder der Gegenstift in seinen Sitz in der festen Halterung derart bewegt wird, dass seine Berührungsebene mit dem Stift mit dieser querverlaufenden Drehebene zusammenfällt, worauf die drehbare Halterung und damit die Stange in die Schließstellung gedreht werden können; beim Öffnen erfolgt die ursprüngliche Blockierung in der geöffneten Stellung der Stange in automatischer Weise, weil beim Drehen der drehbaren Halterung in der entgegengesetzten Richtung dieser Stift seine Position in Ausrichtung mit dem Gegenstift erreicht und dieser unter Antrieb durch die Druckfeder vorspringt.

Diese erfindungsgemäße Vorrichtung führt zu einer einfachen Konstruktion und Handhabbarkeit, wobei die günstige Ergonomie des Schließvorganges hervorzuheben ist, der in bequemer Weise mit einer einzigen Hand ausgeführt werden kann; während man mit dem Finger auf den Stift drückt, erfasst man mit dem Rest die drehbare Halterung und die Stange (an den dieser Halterung benachbarten Teilen) derart, dass man sehr einfach eine Drehung unmittelbar in Fortsetzung der Durchführung der Entblockierung der Drehbewegung ausführen kann.

Gemäß einer weiteren Besonderheit der Erfindung weist dieser Stift einen längsgerichteten Vorsprung auf, der in Verbindung mit einer Führungsbahn angeordnet ist, die im Inneren der drehbaren Halterung mit einer Breite ausgenommen ist, die hinsichtlich ihrer Abmessung und Anordnung in zweckmäßiger Weise bezüglich des Arbeitshubes des Stiftes selbst zwischen den komprimierten und entspannten Zuständen der Druckfeder angeordnet ist. Bei dieser Konstruktion ist der Stift in den drehbaren Körper von dessen Rückseite aus eingebaut und die gemeinsame Wirkung seines längsgerichteten Vorsprunges und der Führungsbahn erfüllt die doppelte Funktion der Führung und Begrenzung des längsgerichteten Betätigungsweges aus.

Eine weitere Besonderheit der Erfindung besteht darin, dass dieser Sitz in einem doppelten Boden gebildet ist, der gegen eine Drehung im Inneren einer Kappe festgelegt ist, in der die seitliche Öffnung ausgebildet ist, die für den Drehhub der Stange zwischen ihren Schließstellungen und Ausgangsstellungen erforderlich ist.

### Zeichnungen und Bezugisziffern

Zum besseren Verständnis der Eigenart der vorliegenden Erfindung ist in den beigefügten Zeichnungen eine bevorzugte gewerbliche Ausführungsform dargestellt, die lediglich ein erläuterndes und nicht beschränkendes Beispiel darstellt.
Die Figur 1 zeigt ein Bügelschloss gemäß der Erfindung im offenen Zustand.
Die Figur 2 zeigt das Bügelschloss nach Figur 1 im geschlossenen Zustand.
Die Figur 3 ist eine Vergrößerung des in Figur 1 gezeigten Schnittes III-III.
Die Figur 4 entspricht der Figur 3, zeigt jedoch den Fall, in dem die Blockierung der Drehung durch Drücken auf den Stift 6 freigegeben wurde.
Die Figur 5 ist eine Vergrößerung der in Figur 3 gezeigten Einzelheit V.
Die Figur 6 ist eine vergrößerte Ansicht der in Figur 4 gezeigten Einzelheit VI.
Die Figur 7 zeigt den Stift 6 in einer Seitenansicht und in horizontaler Lage.
Die Figur 8 ist eine linke Vorderansicht entsprechend der Figur 7.
Die Figur 9 zeigt den doppelten Boden 13, wie er in den Figuren 3 und 4 ersichtlich ist, jedoch in vergrößerter Darstellung.

In diesen Figuren sind die folgenden Bezugsziffern angegeben:
1.- Starrer Bügel
2.- Schlosskörper
3.- Stange
4.- Drehbare Halterung
5.- Starre Halterung
6.- Stift
7.- Gegenstift
8.- Druckfeder
9.- Sitz für den Gegenstift (7) und die Druckfeder (8)
10.- Querebene der Drehung
11.- Längsgerichteter Vorsprung des Stiftes (6)
12.- Hub der drehbaren Halterung (4)
13.- Doppelter Boden
14.- Schale
15.- Seitliche Öffnung der Schale 14.

### Erläuterung einer bevorzugten Ausführungsform

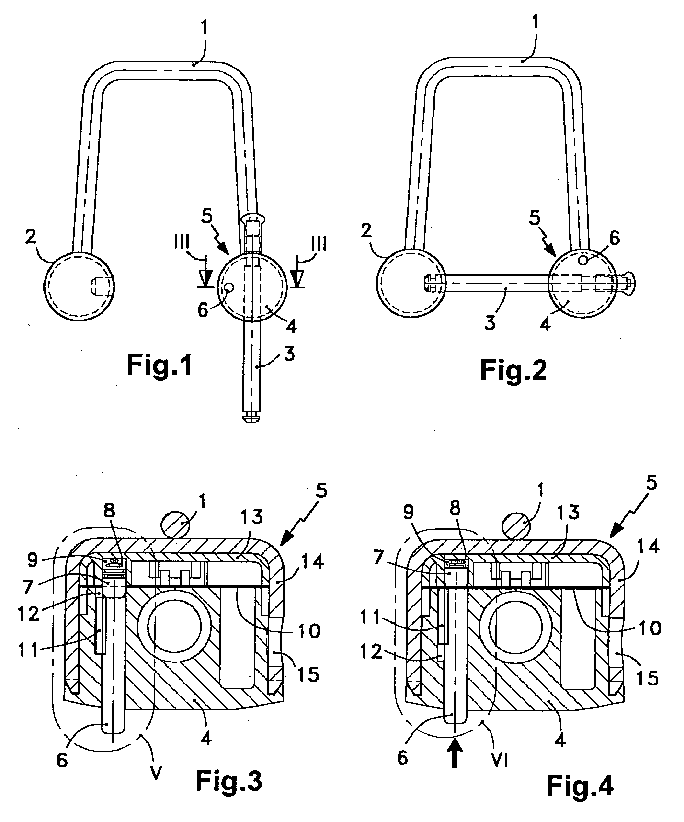

Bezüglich der bereits aufgeführten Figuren und Bezugsziffem ist in den beigefügten Zeichnungen eine Ausführungsform der vorliegenden Erfindung gezeigt, die sich auf eine Blockiervorrichtung für ein Vorhänge- oder Bügelschloss für Zweiradfahrzeuge, wie Fahrräder und Motorräder bezieht. Dieses Bügelschloss weist eine allgemeine Konstruktion (Figuren 1 und 2) auf, die einen starren Bügel (1) (der auch durch das Fahrgestell des Fahrzeuges oder einen Teil hiervon gebildet sein kann), der in fester oder lösbarer Weise mit dem Rahmen des Fahrzeuges verbunden ist, einen Schlosskörper (2), der am Ende eines der zwei Schenkel des starren Bügels (1) (oder des Fahrgestells des Fahrzeuges) befestigt ist, und einen drehbaren Verschlussmechanismus umfasst, der durch eine Stange (3) gebildet ist, die über eine elastische Gegenwirkung die offene Seite des starren Bügels (1) (oder des Fahrgestells) verschließen kann, wobei sie eine Schließstellung einnimmt, in der ihre Spitze in das Innere des Verschlusskörpers (2) eingesetzt ist. Die Stange (3) ist drehbar an dem Ende des zweiten Schenkels des starren Bügels (1) (oder des Fahrgestells des Fahrzeuges) mittels einer drehbaren Halterung (4) befestigt, die sich zwischen dieser aktiven Schließstellung und einer Ruhe- oder Ausgangsstellung dreht, in der sich die Stange (3) in Verlängerung des zweiten Schenkels des starren Bügels (1) befindet, wobei in dieser Stellung Rasteinrichtungen vorgesehen sind, die diese Stellung gegen mögliche unerwünschte Schwingungen der Stange während des Betriebs des Fahrzeuges sichern und die eine Sicherung der drehbaren Halterung (4) gegen eine Drehung gegenüber einer festen Halterung (5) ergeben, die mit dem starren Bügel (1) (oder dem Fahrgestell des Fahrzeuges) verbunden ist.

Das Ziel der Erfindung bezieht sich insbesondere auf diese Einrichtungen zur Drehsicherung der drehbaren Halterung (4) an der festen Halterung (5), die durch eine in Längsrichtung in Bohrungen oder Sitzen im Inneren der drehbaren Halterung (4) und der festen Halterung (5) verschiebbare Anordnung gebildet sind, die in der Ruhestellung der Stange (3) durch die Ausrichtung eines Stiftes (6), eines Gegenstiftes (7) und einer Druckfeder (8) gebildet sind, die den Gegenstift (7) vorspannt, wobei der Stift (6) sich stimseitig durch die drehbare Halterung (4) hindurch erstreckt und der Gegenstift (6) in einem Sitz (9) der festen Halterung (5) angeordnet ist und zwischen dem Stift (6) und der Druckfeder (8) eingefügt ist, die jeweilige komprimierte und entspannte Zustände derart einnehmen kann, dass im komprimierten Zustand die Berührungsebene zwischen dem Stift (6) und dem Gegenstift (7) mit einer Trenn- oder Querebene (10) zusammenfällt, in der die Relativdrehung der drehbaren Halterung (4) gegenüber der starren Halterung (5) erfolgt, während im entspannten Zustand der Gegenstift (7) diese Querebene (10) durchquert, und wobei der Stift (6) eine derartige Länge aufweist, dass er gegenüber der Stirnseite der drehbaren Halterung (4) in einem in geeigneter Weise größeren Maß vorspringt, als der Gleit-Betriebshub zwischen den komprimierten und entspannten Zuständen der Druckfeder (8).

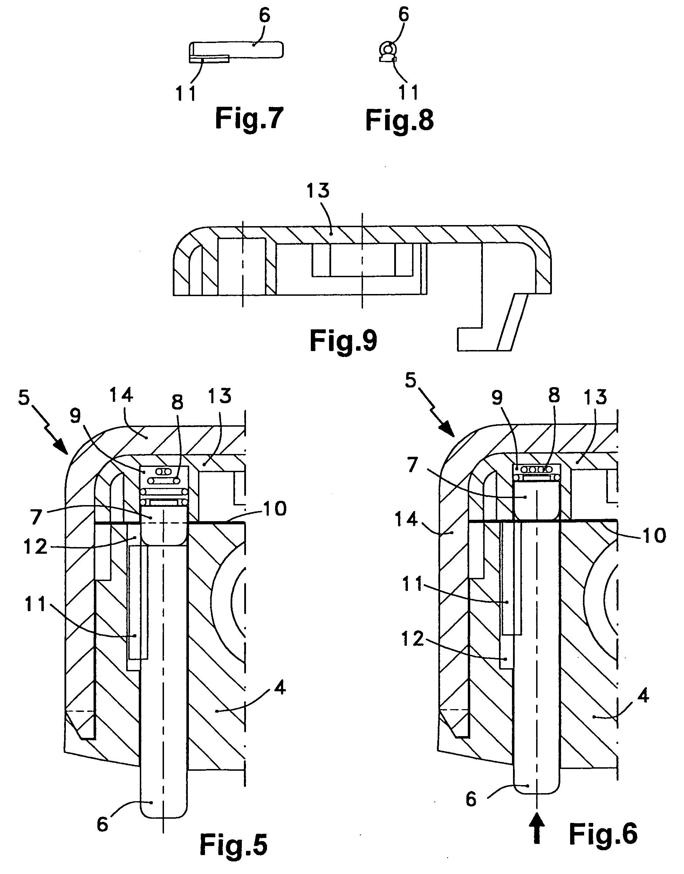

Diese spezielle Konstruktion der Erfindung ist grafisch in den Figuren 3-6 gezeigt. Außerdem zeigen diese Figuren in klarer Weise die einfache Betriebsweise der erfindungsgemäßen Vorrichtung, die darin besteht, dass die Berührungsebene zwischen dem Stift (6) und dem Gegenstift (7) mit der Querebene (10), in der die Relativdrehung der drehbaren Halterung (4) gegenüber der festen Halterung (5) erfolgt, zusammenfällt oder nicht; wenn sich die Verschlussstange (3) des starren Bügels (1) (oder des Fahrgestells des Fahrzeuges) in der offenen oder Ausgangsstellung gemäß Figur 1 befindet, ergibt sich (Figuren 3 und 5) eine Ausrichtung des Stiftes, des Gegenstiftes und der Druckfeder (6-7-8), und durch die Kraft der Druckfeder (8) kann der Gegenstift (7) die Querebene (10) der Drehung durchqueren, und die Stange (3) wird in dieser offenen Stellung verriegelt, um zu vermeiden, dass sie während des Betriebes des Fahrzeuges schwingt und in gefährlicher Weise in den Drehbereich des Rades des Fahrzeuges eindringen kann, wobei gleichzeitig störende und unerwünschte Geräusche und Schläge vermieden werden. Zum Erreichen der Verschlussstellung der Stange (3) reicht es aus, auf den Stift (6) zu drücken (Figuren 3 und 6) worauf die Druckfeder (8) so weit zusammengedrückt wird, dass der Gegenstift (7) in dem Sitz (9) ausgerichtet ist und seine Berührungsebene mit dem Stift (6) mit der Querebene (10) zusammenfällt, worauf man mit der gleichen Hand, die zum Niederdrücken verwendet wurde, die Drehung der drehbaren Halterung (4) bewirken kann, wodurch die Stange (3) in die Schließstellung gebracht wird, die in Figur 2 gezeigt ist.

Um die Verschiebung des Stiftes (6) zu führen und dessen Betriebshub zu begrenzen, weist dieser Stift (6) gemäß der Erfindung einen Längsvorsprung (11) (Figuren 7 und 8) auf, der bezüglich einer Führungsbahn (12) angeordnet ist, die im Inneren der drehbaren Halterung (4) angrenzend an deren Bohrung für den Stift (6) ausgespart ist und eine Länge aufweist, die hinsichtlich ihrer Abmessungen und ihrer Anordnung in geeigneter Weise bezüglich des Betriebshubes des eigentlichen Stiftes (6) zwischen den komprimierten und entspannten Zuständen der Druckfeder (8) angeordnet ist. Eine Betrachtung der Figuren 3-6 ermöglicht außerdem, zu erkennen, dass die Montage des Stiftes (6) durch die Rückseite der drehbaren Halterung (4) hindurch erfolgt, bevor diese mit der festen Halterung (5) verbunden wird.

Gemäß einer bevorzugten Ausführungsform der Erfindung ist dieser Sitz (9) gemäß Figur 9 in einem doppelten Boden (13) gebildet, der drehfest im Inneren einer Kappe (14) angeordnet ist, in der eine seitliche Öffnung (15) ausgebildet ist, die für den Drehhub der Stange (3) zwischen ihrem Verschluss- und Ruhestellungen erforderlich ist.

## Patentansprüche

1. Blockiervorrichtung für ein Bügelschloss für Zweiradfahrzeuge, insbesondere für ein Bügelschloss, das einen starren Bügel (1), der in einer festen oder lösbaren Weise mit dem Rahmen des Fahrzeuges verbunden ist, einen Schlosskörper (2), der am Ende eines der zwei Schenkel des starren Bügels (1) (oder dem Fahrzeugfahrgestell) befestigt ist, und einen drehbaren Verschlussmechanismus umfasst, der durch eine Stange (3) gebildet ist, die die offene Seite des starren Bügels (1) verschließen kann, wenn die Stange eine Schließstellung einnimmt, in der ihre Spitze in das Innere des Schlosskörpers (2) eingesetzt ist, wobei die Stange (3) drehbar an dem Ende des zweiten Schenkels des starren Bügels (1) über eine drehbare Halterung (4) befestigt ist, die sich zwischen der aktiven Schließstellung und einer Ausgangsstellung drehbar ist, in der sich die Stange (3) in Verlängerung des zweiten Schenkels des starren Bügels (1) befindet, wobei in dieser Position Blockiereinrichtungen vorgesehen sind, die die Stange (3) gegen eventuelle unerwünschte Schwingungen in Betrieb des Fahrzeuges sichern und die eine Drehfestlegung der drehbaren Halterung (4) gegenüber einer festen Halterung (5) ergeben, die mit dem starren Bügel (1) fest verbunden ist, , **dadurch gekennzeichnet, dass** die Blockiereinrichtungen gegen eine Drehung der drehbaren Halterung (4) gegenüber der festen Halterung (5) durch eine in Längsrichtung verschiebbare Anordnung gebildet sind, die in der Ausgangsstellung der Stange (3) durch die Ausrichtung eines Stiftes (6), eines Gegenstiftes (7) und einer Druckfeder (8) gebildet ist, die den Gegenstift (7) vorspannt, dass der Stift (6) stirnseitig durch die drehbare Halterung (4) hindurch angeordnet ist, dass der Gegenstift in einem Sitz (9) der festen Halterung (5) angeordnet und zwischen dem Stift (6) und der Druckfeder (8) eingefügt ist, die jeweilige komprimierte und entspannte Zustände einnehmen kann, derart, dass im zusammengedrückten Zustand die Berührungsebene zwischen dem Stift (6) und dem Gegenstift (7) mit einer Querebene (10) zusammenfällt, in der die Relativdrehung der drehbaren Halterung (4) gegenüber der festen Halterung (5) erfolgt, während in dem entspannten Zustand der Gegenstift (7) die Querebene (10) durchquert, und dass der Stift (6) eine derartige Länge aufweist, dass er an der Stirnseite der drehbaren Halterung (4) in einem Maß vorspringt, das in geeigneter Weise größer als der Gleitbetriebshub zwischen den komprimierten und entspannten Zuständen der Druckfeder (8) ist.

2. Blockiervorrichtung nach Anspruch 1, **dadurch gekennzeichnet, dass** der starre Bügel (1) durch das Fahrzeugfahrgestell oder einen Teil hiervon gebildet ist, und dass der Schlosskörper (2) und die feste Halterung (5) an dem Fahrzeugfahrgestell oder an dessen Teil angeschweißt sind

3. Blockiervorrichtung nach Anspruch 1 oder 2, **dadurch gekennzeichnet, dass** der Stift (6) einen Längsvorsprung (11) aufweist, der bezüglich einer Führungsbahn (12) angeordnet ist, die im Inneren der drehbaren Halterung (4) mit einer Breite ausgespart ist, das sie hinsichtlich ihres Maßes und ihrer Anordnung in zweckmäßiger Weise bezüglich des Betriebshubes des Stiftes (6) zwischen den komprimierten und entspannten Zuständen der Druckfeder (8) angeordnet ist.

4. Blockiervorrichtung nach einem der vorhergehenden Ansprüche, **dadurch gekennzeichnet, dass** der Sitz (9) in einem doppelten Boden (13) ausgebildet ist, der gegen eine Drehung im Inneren einer Kappe (14) festgelegt ist, in der die seitliche Öffnung (15) ausgebildet ist, die für den Drehhub der Stange (3) zwischen deren Schließstellung und Ausgangsstellung erforderlich ist.
